# EUROPÄISCHE PATENTSCHRIFT

(11) **EP 2 897 102 B1**
(45) Veröffentlichungstag und Bekanntmachung des Hinweises auf die Patenterteilung: **03.06.2020**
(21) Anmeldenummer: 15000069.3
(22) Anmeldetag: 14.01.2015
(51) Int. Cl.: G06T 7/285, G06T 7/593, G06T 7/73

(54) **Verfahren zur Bestimmung der Positionsdaten eines Zielobjekts in einem Referenzsystem und Verfahren zur Führung eines vorzugsweise als Flugkörper ausgebildeten Luftfahrzeugs**
Method for determining positional data of a target object in a reference system and method for guiding an aircraft, preferably in the form of a missile
Procédé de détermination des données de position d'un objet cible dans un système de référence et procédé de guidage d'un aéronef conçu de préférence comme un missile

(30) Priorität: 16.01.2014 DE 102014000436
(43) Veröffentlichungstag der Anmeldung: 22.07.2015
(73) Patentinhaber: MBDA Deutschland GmbH, 86529 Schrobenhausen (DE)
(72) Erfinder: Grandl, Stefan, 84562 Mettenheim (DE); Bauermann, Ingo, Dr., 80803 München (DE); Kuligk, Thomas, 83229 Aschau (DE); Müller, Jörg, 85276 Pfaffenhofen (DE); Zoz, Jürgen, Dr., 86316 Friedberg (DE); Gilch, Joachim, 82178 Puchheim (DE)
(74) Vertreter: Isarpatent

(56) Entgegenhaltungen:
- DE-A1-102010 018 143
- US-A1- 2005 248 539
- Ramesh Jain ET AL: "Chapter 12: Calibration" In: "Machine Vision", 1. Januar 1995 (1995-01-01), Mc Graw Hill, XP055194032, ISBN: 978-0-07-032018-5 Seiten 309-364, * Seite 289, Absatz 1 * * Abschnitte 11.1.1, 11.4.2 *
- Ramesh Jain ET AL: "Chapter 11: Depth" In: "Machine Vision", 1. Januar 1995 (1995-01-01), Mc Graw Hill, XP055194033, ISBN: 978-0-07-032018-5 Seiten 289-308, * Seite 309, Absatz 1 - Seite 310, Absatz 2 *

## Beschreibung

### TECHNISCHES GEBIET

Die vorliegende Erfindung betrifft ein Verfahren zur Bestimmung der Positionsdaten eines Zielobjekts in einem Referenzsystem. Sie ist weiterhin gerichtet auf ein Verfahren zur Führung eines vorzugsweise als Flugkörper ausgebildeten Luftfahrzeugs, wobei zunächst die Positionsdaten des Zielobjekts im Referenzsystem gemäß dem Verfahren zur Bestimmung der Positionsdaten bestimmt werden oder worden sind.

### HINTERGRUND DER ERFINDUNG

Ein derartiges Verfahren, bei welchem die Positionsdaten eines Zielobjekts vermessen und relativ zu einem Referenzmodell bestimmt werden können, ist üblicherweise vorgesehen, um entweder eine fliegende Sensorplattform (zum Beispiel eine Drohne) oder ein Waffensystem (zum Beispiel einen Flugkörper) zu einem Zielobjekt hin zu führen. Die Vermessung des Zielobjekts erfolgt dabei typischerweise durch einen sich in Zielnähe befindlichen Beobachter, der eine dislozierte Sensorplattform oder ein Waffensystem auf das Zielobjekt einweisen will. Es existieren Verfahren, die dem Beobachter eine aktive Zielvermessung ermöglichen. Dabei kann er seine eigene Position, zum Beispiel mittels eines Satellitennavigationssystems und seine Blickrichtung mittels eines Kompasses messen. Mit Hilfe eines Laserentfernungsmessers kann er nun die Entfernung zwischen seinem Standort und dem Zielobjekt messen und daraus die absolute, georeferenzierte Zielposition bestimmen, siehe zum Beispiel DE 10 2010 018 143 A1. Der Nachteil derartiger aktiver Verfahren besteht darin, dass sich der Beobachter durch das Verwenden eines Laserentfernungsmessers der Gefahr aussetzt, entdeckt zu werden. So bringt er sich selbst in Gefahr und dem Zielobjekt bietet sich die Möglichkeit eines Ausweich- oder Täuschmanövers. Des Weiteren liegen bei diesem bekannten Verfahren mehrere Messfehlerquellen vor, zum Beispiel die Ungenauigkeit der eigenen Positionsmessung mittels des Satellitennavigationssystems, die Winkelungenauigkeiten bei der Vermessung der Blickrichtung und eine eventuelle Strahldivergenz des Laserstrahls. Dies hat zusammen eine unpräzise Einweisung auf das Ziel zur Folge.

### STAND DER TECHNIK

Weiterhin sind auch passive Verfahren entwickelt worden, um diese Nachteile des aktiven Verfahrens zu vermeiden. Bei einem bekannten passiven Verfahren steht dem Beobachter ein dreidimensionales Referenzmodell der Umgebung des Zielobjekts zur Verfügung. Nimmt er nun von seinem Standort aus ein Bild des Zielobjekts mit der Umgebung auf, kann er das Modell in dieses Bild projizieren und durch Abgleich relevanter Merkmale im Bild und im dreidimensionalen Referenzmodell eine Abbildungsvorschrift zwischen beiden berechnen. Dadurch ist es ihm möglich, den Zielpunkt im Bild zu markieren und ins dreidimensionale Referenzmodell zurück zu übertragen, indem ein virtueller Sichtstrahl von der Beobachterposition aus durch den markierten Zielpunkt definiert und mit dem dreidimensionale Referenzmodell geschnitten wird. Auf diese Weise kann eine dreidimensionale Zielposition relativ zu der Referenzstruktur ermittelt werden, ohne dass die eigene Position des Beobachters dabei erkennbar wird. Ein solches Verfahren ist beispielsweise aus der DE 10 2010 018 143 A1 bekannt.

Die Voraussetzungen für dieses bekannte passive Verfahren zur Bestimmung der Positionsdaten eines Zielobjekts sind die Verfügbarkeit des dreidimensionalen Referenzmodells der Umgebung des Zielobjekts, ein aktuelles Kamerabild des Zielobjekts, aufgenommen durch den Beobachter, und die Bedingung, dass der virtuelle Sichtstrahl durch den markierten Bild-Zielpunkt eine Fläche oder Linie schneiden muss, die im dreidimensionalen Referenzmodell enthalten ist. Der Vorteil dieses passiven Verfahrens besteht darin, dass der Beobachter sich selbst nicht durch Kenntlichmachung gefährdet. Durch die Verwendung der dreidimensionalen Referenzdaten ist die Zielbestimmung hochpräzise und es ist eine eindeutige Zielvermessung möglich. Dieses Verfahren ist außerdem unabhängig von der Perspektive, in der der Beobachter das Zielobjekt sieht, und weiterhin unabhängig von der Auflösung und vom Spektralbereich der beteiligten Sensoren. Weiterhin ist dieses Verfahren resistent gegenüber möglichen Störungen des Satellitennavigationssystems. Zudem ist das Verfahren echtzeitfähig. Allerdings besitzt dieses bekannte Verfahren auch Nachteile, denn es können nur Objekte als Ziel markiert und vermessen werden, die im dreidimensionalen Referenzmodell abgebildet oder enthalten sind. Da es sich bei dem dreidimensionalen Referenzmodell um ein statisch erfasstes Datenmodell handelt, können mit diesem bekannten Verfahren keine kontinuierlichen Zielpositionen bewegter Objekte vermessen werden.

### DARSTELLUNG DER ERFINDUNG

Es ist daher die Aufgabe der vorliegenden Erfindung, ein bekanntes Verfahren zur Bestimmung der Positionsdaten eines Zielobjekts in einem Referenzsystem so weiterzubilden, dass auch die Positionsdaten von Zielobjekten erfasst werden können, die nicht Bestandteil des dreidimensionalen Referenzmodells sind. Des Weiteren ist es eine Aufgabe, ein Verfahren zur Führung eines fliegenden Waffensystems zu einem Zielobjekt und zur Ausrichtung einer Waffe auf das Zielobjekt anzugeben, welches zunächst das erfindungsgemäße Verfahren zur Bestimmung der Positionsdaten des Zielobjekts durchführt und das fliegende Waffensystem, beispielsweise einen Flugkörper, zum Zielobjekt führt.

Die erste Aufgabe wird erfindungsgemäß durch das Verfahren mit den Merkmalen des Patentanspruchs 1 gelöst.

### VORTEILE

Durch das Anvisieren eines Punktes auf dem Zielobjekt aus zwei Richtungen, also von zwei voneinander unterschiedlichen Beobachtungspositionen, und die erfindungsgemäß durchgeführte Berechnung der dreidimensionalen Koordinate des Punktes auf dem Zielobjekt als Positionsdaten relativ zum Referenzmodell ist der Punkt des Zielobjekts, also das Ziel, für alle Zielerfassungseinrichtungen identifizierbar, die mit diesem dreidimensionalen Referenzmodell arbeiten.

Der Vergleich des erfassten Bildes mit dem dreidimensionalen Referenzmodell liefert eine zuverlässige Bestimmung der zweiten Beobachtungsposition.

Die alternative Variante benötigt nur einen Abgleich eines erfassten Bildes mit dem Referenzmodell, da der zweite Abgleich zur Bestimmung der zweiten Beobachtungsposition durch einen Abgleich der aufgenommenen Bilder untereinander und anschließender Berechnung der zweiten Position relativ zum Referenzmodell erfolgt.

Vorteilhafte Weiterbildungen des erfindungsgemäßen Verfahrens sind in den Ansprüchen 2 und 3 angegeben.

Vorzugsweise sind die vorgegebenen Merkmale des merkmalsextrahierten Bildes in den Schritten b2a) und b4a) Linien und in den Schritten b2b) und b4b) wird ein dreidimensionales Linienmodell aus dem dreidimensionalen Referenzmodell gebildet.

Dabei erfolgt die Bestimmung der relativen Positionsdaten und der Blickrichtung in den Schritten b2b) und b4b) jeweils in den folgenden Teilschritten:
ba) Projizieren des Linienmodells aufgrund einer groben Positions- und Lagehypothese für die Beobachtungsposition in das von einer Bilderfassungseinrichtung aufgenommene Bild der Umgebung des Zielobjekts;
bb) Abgleichen der Linien des dreidimensionalen Linienmodells mit aus dem Bild extrahierten Liniensegmenten; und
bc) Berechnen einer Korrektur der Positions- und Lagehypothese aus dem Abgleich und Bestimmen der Positionsdaten der Beobachtungsposition relativ zum Referenzmodell.

Diese Schritte lassen sich schnell und einfach mit einem auf einem Computersystem laufenden Bildverarbeitungsprogramm durchführen, so dass der Abgleich quasi in Echtzeit auf einer Bildwiedergabeeinrichtung dem Beobachter dargestellt werden kann.

Durch diese einmalige oder mehrmalige Wiederholung der Schritte a) bis e) wird ein Bewegungsprofil des Zielobjekts erstellt, welches die Daten für eine Prognoserechnung der zukünftigen weiteren Bewegungsrichtung und Bewegungsgeschwindigkeit des Zielobjekts liefert.

Die auf das Verfahren zur Führung eines vorzugsweise als Flugkörper ausgebildeten Luftfahrzeugs, zum Beispiel eines fliegenden Waffensystems, zu einem Zielobjekt und zur Ausrichtung einer Waffe auf das Zielobjekt gerichtete Teil des Aufgabe wird durch das Verfahren mit den Merkmalen des Patentanspruchs 4 gelöst.

Dabei werden zunächst die Positionsdaten des Zielobjekts in einem Referenzsystem als relative Positionsdaten in einem Referenzmodell gemäß dem erfindungsgemäßen Verfahren zur Bestimmung der Positionsdaten des Zielobjekts in einem Referenzsystem durchgeführt. Danach werden zur Führung des Luftfahrzeugs die folgenden Schritte vorgenommen:
aa) Erfassen eines Bildes der Umgebung des Zielobjekts mit einer an Bord des Luftfahrzeugs vorgesehenen Bilderfassungseinrichtung;
bb) Abgleichen des in Schritt aa) gewonnenen Bildes mit dem dreidimensionalen Referenzmodell und daraus Bestimmen der Abbildungsvorschrift zwischen Bild und Referenzmodell, indem
   b2a) zur Bildung eines merkmalsextrahierten Bildes vorgegebene Merkmale aus dem in Schritt aa) erfassten ersten Bild extrahiert werden und
   b2b) die extrahierten Merkmale des merkmalsextrahierten Bildes mit Merkmalen der gleichen Art aus dem dreidimensionalen Referenzmodell verglichen werden und durch diesen Vergleich ein mit dem in Schritt aa) erfassten Bild maximal übereinstimmendes Referenzbild mit der zugehörigen ersten Referenz-Beobachtungsposition und Blickrichtung im dreidimensionalen Referenzmodell ermittelt wird;
cc) Bestimmen der aktuellen Positionsdaten der an Bord des Luftfahrzeugs vorgesehenen Bilderfassungseinrichtung und damit des Luftfahrzeugs relativ zum Referenzmodell aus der Referenz-Beobachtungsposition;
dd) Identifikation des Zielobjekts in dem in Schritt aa) gewonnenen Bild anhand der in Schritt e) ermittelten relativen Positionsdaten des Zielobjekts und
ee) Steuern des Luftfahrzeugs zu dem in das im Schritt dd) identifizierten Zielobjekt.

Dieses erfindungsgemäße Flugführungsverfahren arbeitet ebenfalls mit demselben dreidimensionalen Referenzmodell und erhält die in Bezug auf das Referenzmodell relativen Daten des Zielobjekts aus der vorherigen Zielerfassung. Dadurch kann die entsprechende Flugführungseinrichtung beziehungsweise der entsprechende Waffenkontrollcomputer das Zielobjekt durch Rückabgleich des Referenzmodells mit einem von der Bilderfassung des Luftfahrzeugs aufgenommenen Bild die tatsächliche Zielposition identifizieren.

Vorteilhaft ist dabei, wenn die Identifikation des Zielobjekts im Schritt dd) unter Berücksichtigung der im Schritt bb) bestimmten Abbildungsvorschrift erfolgt und wenn bei der Steuerung des Luftfahrzeugs zu dem in das Zielobjekt im Schritt ee) die in Schritt g) bestimmte Bewegungsrichtung und/oder die Bewegungsgeschwindigkeit des Zielobjekt berücksichtigt wird beziehungsweise berücksichtigt werden. Das Luftfahrzeug kann dabei das Zielobjekt auch dann identifizieren, wenn zwischen der Zielerfassung durch den Beobachter und dem Aufnehmen des Bildes mittels der Bilderfassungseinrichtung im Luftfahrzeug eine Zeitspanne vergangen ist, da aufgrund des erfassten Bewegungsprofils des Zielobjekts eine Hochrechnung auf die weitere Bewegung des Zielobjekts durchgeführt werden kann.

Besonders vorteilhaft ist es, wenn das Luftfahrzeug ein unbemannter Flugkörper ist, der mittels des Verfahrens in das Zielobjekt gesteuert wird.

Auch vorteilhaft ist es, wenn das Luftfahrzeug mit zumindest einer Waffe versehen ist oder ein entsprechend mit einer Waffe versehener Flugkörper ist und wenn die Waffe mittels des Verfahrens auf das Zielobjekt ausgerichtet wird.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine perspektivische Ansicht einer schematischen Szene, in der als Zielobjekt 1 ein Kraftfahrzeug und dessen Umgebung gezeigt ist;
- Fig. 2: ein Flussdiagramm einer ersten Ausführung des Verfahrens; und
- Fig. 3: ein Flussdiagramm einer zweiten Ausführung des Verfahrens.

### DARSTELLUNG VON BEVORZUGTEN AUSFÜHRUNGSBEISPIELEN

Das Zielobjekt 1 zeigt ein Kraftfahrzeug und dessen Umgebung. Die Umgebung besteht aus einem Wohnhaus 2 und einer Fahrzeughalle 3 sowie einer Straße 4. Von der Umgebung des Zielobjekts 1, nämlich vom Haus 2, von der Fahrzeughalle 3 und von der Straße 4 existiert ein dreidimensionales Referenzmodell, beispielsweise ein Linienmodell, das Linien und Kanten der einzelnen Objekte (Haus 2, Fahrzeughalle 3 und Straße 4) enthält.

Das Zielobjekt 1 wird von einer ersten Beobachtungsposition 5 und einer zweiten Beobachtungsposition 6 aus unterschiedlichen Richtungen mittels einer ersten Bilderfassungseinrichtung 7 und einer zweiten Bilderfassungseinrichtung 8 aufgenommen.

Diese zeitsynchrone Bilderfassung mit zwei Bilderfassungseinrichtungen ist dann vorteilhaft, wenn sich das Zielobjekt 1 bewegt. Falls das Zielobjekt 1 stationär ist, beispielsweise ein parkendes Auto oder ein abgestellter Container ist, so ist es auch möglich, die Bilderfassungen von der ersten Beobachtungsposition 5 und von der zweiten Beobachtungsposition 6 zeitlich nacheinander mit einer einzigen Bilderfassungseinrichtung 7 durchzuführen. Wesentlich ist, dass vom Zielobjekt mindestens zwei Bilder aus unterschiedlichen Richtungen, also von zumindest zwei Beobachtungspositionen aus, die vom Zielobjekt beabstandet sind, aufgenommen werden, die das Zielobjekt beide in einer unveränderten Position in Bezug auf die Umgebung (Haus 2, Fahrzeughalle 3 und Straße 4) erfassen.

Mit den auf diese Weise aufgenommenen Bildern kann dann das Verfahren zur Bestimmung der Positionsdaten des Zielobjekts auf die nachstehend beschriebenen alternativen Weisen durchgeführt werden.

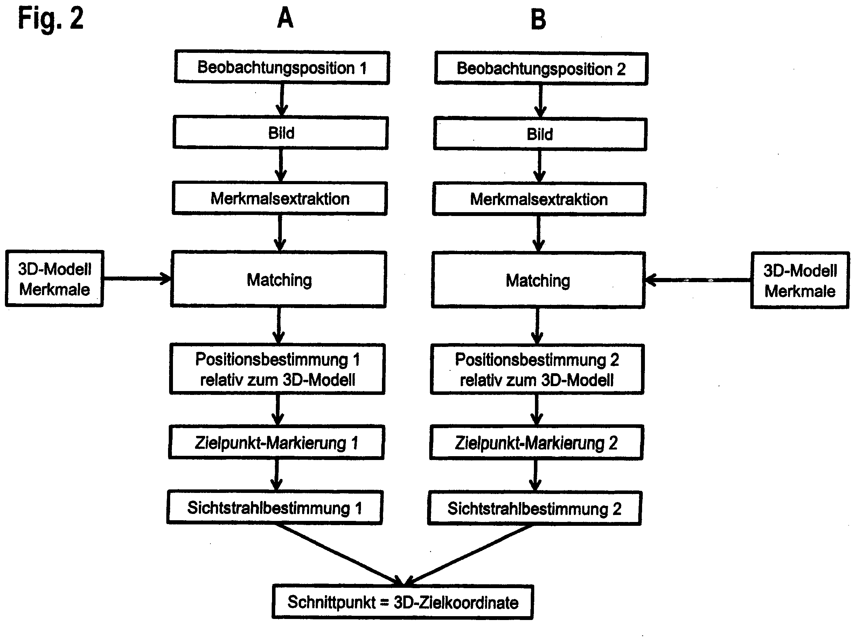

Eine erste Ausführungsform des erfindungsgemäßen Verfahrens ist als Flussdiagramm in Fig. 2 dargestellt. Zunächst werden die beiden räumlich voneinander unterschiedlichen Beobachtungspositionen 5 und 6 nach örtlichen und taktischen Gesichtspunkten ausgewählt. An jeder dieser beiden Beobachtungspositionen 5 und 6 wird ein Bild mit der entsprechenden Bilderfassungseinrichtung 7 beziehungsweise 8 aufgenommen. Das jeweils aufgenommene Bild wird einer Merkmalsextraktion unterzogen, bei der vorbestimmte Merkmale, beispielsweise Linien, aus dem mit der Bilderfassungseinrichtung 7, 8 erfassten Bild mittels einer (nicht gezeigten) Bildverarbeitungseinrichtung extrahiert werden. Das auf diese Weise gewonnene Bild der extrahierten Merkmale, das beispielsweise ein Linienbild ist, wird dann in der Bildverarbeitungseinrichtung mit einem gespeicherten dreidimensionalen Modell der Umgebung des Zielobjekts 1 verglichen, wobei dieses Modell Merkmale der gleichen Art (beispielsweise Linien) enthält, wie die Merkmale, die aus dem aufgenommenen Bild extrahiert worden sind.

Bei diesem Vergleich des aus dem aufgenommenen Bild gewonnenen merkmalsextrahierten Bild mit dem dreidimensionalen Modell wird beispielsweise das dreidimensionale Modell so lange gedreht, bis eine maximale Übereinstimmung der ausgewählten Merkmale, beispielsweise der Linien, festgestellt wird. Dieser Schritt des sogenannten "Matching" liefert eine Bestimmung der jeweiligen Beobachtungsposition, von der aus das Bild aufgenommen worden ist, relativ zum dreidimensionalen Modell der Umgebung des Zielobjekts. Diese relative Positionsbestimmung wird sowohl für die erste Beobachtungsposition als auch für die zweite Beobachtungsposition durchgeführt, wie es in den Ablaufsträngen A und B des Flussdiagramms der Fig. 2 dargestellt ist.

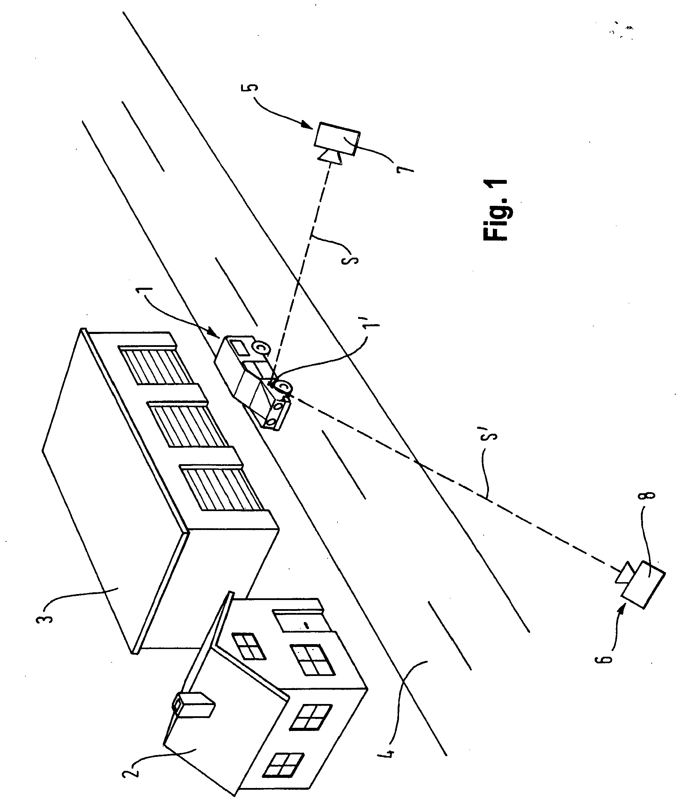

Nachdem die Positionsdaten der entsprechenden Beobachtungsposition 5, 6 relativ zum dreidimensionalen Modell ermittelt worden sind, wird in dem aufgenommenen Bild ein Zielpunkt 1' auf dem Zielobjekt, beispielsweise mittels eines Fadenkreuzes, anvisiert und markiert, indem beispielsweise die Koordinaten des Fadenkreuzes relativ zum aufgenommenen Bild abgespeichert werden. Ein in Fig. 1 ausgewählter Zielpunkt 1' ist beispielsweise das linke Vorderrad des als Zielobjekt 1 dargestellten Fahrzeugs.

Es wird daraufhin ein virtueller Sichtstrahl S, S' von den Koordinaten der Beobachtungsposition zu den gespeicherten Koordinaten des anvisierten Zielpunkts 1' berechnet und in das dreidimensionale Referenzmodell übertragen. Diese Schritte des Anvisierens des Zielpunkts 1' und der Berechnung des virtuellen Sichtstrahls S, S' werden von beiden Beobachtungspositionen 5, 6 aus vorgenommen. Der Schnittpunkt der in das dreidimensionale Modell übertragenen virtuellen Sichtstrahlen S, S' entspricht der Lage des Zielpunkts 1' im dreidimensionalen Referenzmodell. Die Koordinaten dieses Schnittpunktes im Referenzmodell werden dann mittels der Bildverarbeitungseinrichtung berechnet und liefern eine dreidimensionale Koordinate des Zielpunkts 1' als Positionsdaten im Referenzmodell. Diese Positionsdaten können dann beispielsweise an einen Waffensteuerungscomputer eines mit einer Waffe versehenen Luftfahrzeugs oder eines Flugkörpers übertragen werden. Der Waffensteuerungscomputer, in dem ebenfalls das dreidimensionale Referenzmodell der Umgebung des Zielobjekts gespeichert ist oder in den es übertragen wird, kann dann mittels der erhaltenen Positionsdaten des Zielpunkts diesen Zielpunkt in dem von einer Bilderfassungseinrichtung des Luftfahrzeugs oder des Flugkörpers aufgenommenen Szenebilds verorten und seine Wirkeinrichtungen auf diesen Zielpunkt richten.

Der Abgleich des von der Bilderfassungseinrichtung des Luftfahrzeugs oder des Flugkörpers aufgenommenen Bildes mit dem dreidimensionale Referenzmodell erfolgt durch Matching auf gleiche Weise wie dies vorstehend bereits beschrieben worden ist.

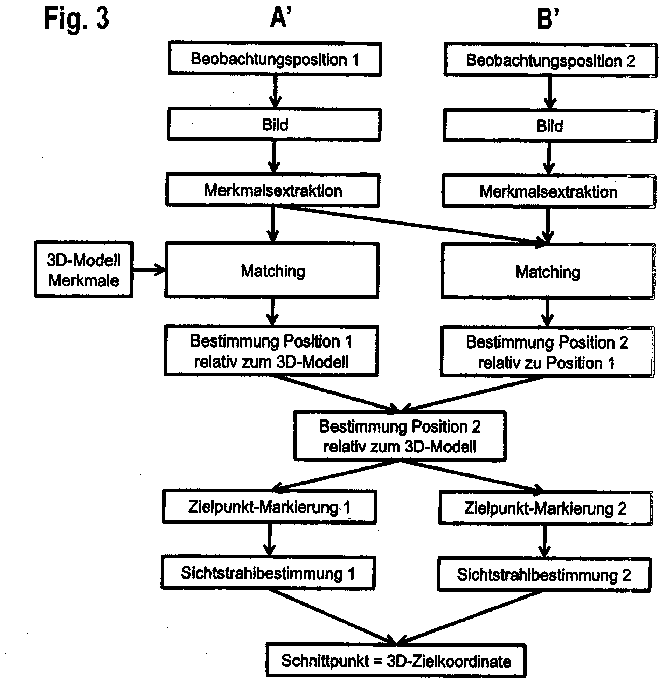

Eine alternative Vorgehensweise ist in Fig. 3 dargestellt. Das Verfahren der Fig. 2 und das Verfahren der Fig. 3 laufen im Wesentlichen auf die gleiche Weise ab, unterscheiden sich jedoch in der Art und Weise wie die relativen Positionsdaten der zweiten Beobachtungsposition im Ablaufstrang B' ermittelt werden. Der Ablaufstrang A' zur Ermittlung der relativen Positionsdaten für die erste Beobachtungsposition läuft in der gleichen Weise ab wie dies vorstehend in Verbindung mit der Fig. 2 beschrieben worden ist.

Zur Bestimmung der Positionsdaten der zweiten Beobachtungsposition werden die merkmalsextrahierten Bilder, die von der ersten Bilderfassungseinrichtung 7 und von der zweiten Bilderfassungseinrichtung 8 aufgenommen worden sind, in der Bildverarbeitungseinrichtung miteinander verglichen, um eine Beschreibung der Lage der Merkmale des zweiten merkmalsextrahierten Bilds relativ zu den entsprechenden Merkmalen des ersten merkmalsextrahierten Bilds zu berechnen. Mittels dieser relativen Lage der einzelnen Merkmale des zweiten Bilds zu denen des ersten Bilds wird dann das beim Matching der von der ersten Beobachtungsposition aufgenommenen Bilddaten im Ablaufstrang A' gewonnene Ergebnis korrigiert und auf diese Weise werden die Positionsdaten der zweiten Beobachtungsposition relativ zum dreidimensionalen Referenzmodell erhalten.

Die Markierung des Zielpunkts sowie die Sichtstrahlbestimmung und die sich daraus ergebende Bestimmung der Zielpunktkoordinaten im dreidimensionalen Referenzmodell erfolgen auf die gleiche Weise wie dies in Verbindung mit Fig. 2 beschrieben worden ist.

Die beiden vorstehend beschriebenen erfinderischen Verfahren ermöglichen es, auch Objekte als Ziel passiv zu vermessen und relativ zu einem dreidimensionalen Referenzmodell zu verorten, die nicht Element des Referenzmodells sind. Beispiele sind parkende Autos, neu aufgestellte Gebäude, Container, Hallen oder militärische Stellungen. Bei solchen statischen Zielen lokalisiert sich zunächst der Beobachter an der ersten Position relativ zum dreidimensionale Referenzmodell über den beschriebenen Abgleich eines mittels einer Bilderfassungseinrichtung von der Beobachtungsposition aufgenommenen Bildes mit dem dreidimensionale Referenzmodell.

Diese eine Information ist jedoch nicht ausreichend, um die Zielkoordinate eines nicht im Referenzmodell modellierten Objekts zu bestimmen. Es ist weitere Information über dieses Objekt erforderlich. Beispielsweise könnten Erfahrungswerte oder Entfernungsschätzungen dafür ausreichend sein, wenn die Szene solche Schätzungen ermöglicht. Ein Beispiel dafür ist ein Auto, das beispielsweise mittig zwischen dem Haus 2 und der Fahrzeughalle 3 parkt und/oder die Erkenntnis, dass dessen Motorblock auf ungefähr 60 cm Höhe über dem Boden liegt.

Derartige auf Erfahrungswerten oder Schätzungen basierende Zielansprachen sind jedoch unpräzise, uneindeutig und fehleranfällig, so dass es zur präzisen Zielerfassung erfindungsgemäß vorgesehen ist, die Vermessungsinformation aus einer zweiten Beobachterposition zu gewinnen. Dabei kann sich - bei statischen Zielobjekten - der Beobachter zeitlich nach der Messung von der ersten Beobachtungsposition an die zweite Beobachtungsposition begeben und dort die zweite Lokalisierung vornehmen oder - bei bewegten Zielobjekten - kann ein zweiter Beobachter an einer zweiten Beobachtungsposition vorgesehen sein, der zeitsynchron mit dem ersten Beobachter die entsprechende Positionsdatenbestimmung und Zielvermessung vornimmt.

Der Vorteil der erfindungsgemäßen Vorgehensweise besteht darin, dass sie präzise ist, unanfällig gegen Bedienerfehler ist, kein Vorwissen über Zielobjekte erfordert und dass sie ein passives Verfahren ohne aktive Zielbeleuchtung darstellt.

Ist die dreidimensionale Koordinate des Zielpunktes relativ zum dreidimensionalen Referenzmodell bestimmt worden, kann sie zusammen mit dem Modell beispielsweise an einen Flugkörper mit bildgebendem Sensor übertragen werden. Der entsprechende Bordcomputer des Flugkörpers kann nun, wie schon der Beobachter, das Modell in sein Sensorbild projizieren und durch Merkmalsabgleich Navigations-Ungenauigkeiten ausgleichen. Wird nun die dreidimensionale Zielkoordinate in das Bild des Flugkörpersensors projiziert, kann die Navigationseinrichtung des Flugkörpers den Flugkurs so steuern, dass beispielsweise die optische Achse mit der Zielkoordinate im Bild zur Übereinstimmung gebracht wird und der Flugkörper genau dieses Ziel beziehungsweise diesen Zielpunkt anfliegt.

Bei diesem Verfahren ist es unwichtig, wie die Zielsignatur aussieht, ob sie getarnt ist oder ungetarnt ist, ob es sich um ein Auto oder einen Panzer handelt, denn abgeglichen werden nur die Merkmale des Referenzmodells. Für die Wiederauffindung des Ziels im Sensorbild des Flugkörpers wird nur die zum Referenzmodell relative dreidimensionale Koordinate des Zielpunkts 1' verwendet, ohne dass das eigentliche Ziel, sofern es statisch ist, über die Zeit getrackt werden muss. Wichtig ist nur, dass Teile des Referenzmodells im Sensorbild sichtbar und zum Abgleich verfügbar sind.

Durch Stereovermessung des Zielobjekts 1 aus zwei unterschiedlichen Beobachtungsperspektiven können auch nicht im dreidimensionalen Referenzmodell enthaltene Zielobjekte exakt vermessen und dort in relativer Lage verortet werden. Nebenbei können dadurch die Daten des dreidimensionalen Modells interaktiv aktualisiert, korrigiert oder erweitert werden, um für zukünftige Missionen aktuellere Ortsdaten zur Verfügung stellen zu können.

Durch mehrmaliges Durchlaufen des erfindungsgemäßen Verfahrens können auch bewegte Ziele erfasst und im Modell verortet werden, ohne dass das Zielobjekt selbst über die Zeit getrackt wird. Dadurch entsteht eine Unabhängigkeit gegenüber einer aktuellen Zeitsignatur. Die so mehrmals ermittelte Zielkoordinate kann nun regelmäßig an den Flugkörper übermittelt werden und ermöglicht dadurch auch ein Einweisen des Flugkörpers auf bewegte Ziele.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Zielobjekt
- 1': Zielpunkt
- 2: Wohnhaus
- 3: Fahrzeughalle
- 4: Straße
- 5: erste Beobachtungsposition
- 6: zweite Beobachtungsposition
- 7: erste Bilderfassungseinrichtung
- 8: zweite Bilderfassungseinrichtung

- A': Ablaufstrang
- B': Ablaufstrang
- S: Sichtstrahl
- S': Sichtstrahl

## Patentansprüche

1. Verfahren zur Bestimmung der Positions- und Bewegungsdaten eines bewegten Zielobjekts in einem Referenzsystem aus zumindest zwei vom Zielobjekt beabstandeten Beobachtungspositionen, mit den Schritten:
a) Bereitstellen eines dreidimensionalen Referenzmodells der Umgebung des Zielobjekts, wobei das Zielobjekt nicht Bestandteil des Referenzmodells ist;
b) Bestimmen der Positionsdaten von zumindest einer ersten und einer zweiten Beobachtungsposition mit den Schritten:
b1) Erfassen eines ersten Bildes des Zielobjekts und von dessen Umgebung von der ersten Beobachtungsposition aus;
b2) Abgleichen des von der ersten Beobachtungsposition aus erfassten ersten Bildes mit dem dreidimensionalen Referenzmodell und Bestimmen der Positionsdaten der ersten Beobachtungsposition und der Lage relativ zum Referenzmodell, indem
b2a) zur Bildung eines merkmalsextrahierten ersten Bildes vorgegebene Merkmale aus dem erfassten ersten Bild extrahiert werden
und
b2b) die extrahierten Merkmale des merkmalsextrahierten ersten Bildes mit Merkmalen der gleichen Art aus dem dreidimensionalen Referenzmodell verglichen werden und durch diesen Vergleich ein mit dem erfassten ersten Bild maximal übereinstimmendes erstes Referenzbild mit der zugehörigen ersten Referenz-Beobachtungsposition und Lage im dreidimensionalen Referenzmodell ermittelt wird;
b3) Erfassen eines zweiten Bildes des Zielobjekts und von dessen Umgebung von der zweiten Beobachtungsposition aus zeitsynchron mit dem Erfassen des ersten Bildes;
b4) Abgleichen des von der zweiten Beobachtungsposition aus erfassten zweiten Bildes mit dem ersten Bild oder mit dem dreidimensionalen Referenzmodell und Bestimmen der Positionsdaten der zweiten Beobachtungsposition und der Lage relativ zum ersten Bild beziehungsweise relativ zum dreidimensionalen Referenzmodell, indem b4a)
zur Bildung eines merkmalsextrahierten zweiten Bildes vorgegebene Merkmale aus dem erfassten zweiten Bild extrahiert werden und
b4b) die extrahierten Merkmale des merkmalsextrahierten zweiten Bildes mit Merkmalen der gleichen Art aus dem dreidimensionalen Referenzmodell verglichen werden und durch diesen Vergleich ein mit dem erfassten zweiten Bild maximal übereinstimmendes zweites Referenzbild mit der zugehörigen zweiten Referenz-Beobachtungsposition und Lage im dreidimensionalen Referenzmodell ermittelt wird oder
b'4) Abgleichen des von der zweiten Beobachtungsposition aus erfassten Bildes mit dem von der ersten Beobachtungsposition aus erfassten ersten Bild mittels Merkmalsabgleich von in den Bildern enthaltenen Merkmalen der Umgebung des Zielobjekts und Bestimmen der relativen Lage der zweiten Beobachtungsposition zur ersten Beobachtungsposition;
und
b'5) Errechnen der zweiten Beobachtungsposition relativ zum Referenzmodell aus der relativen Lage zur ersten Beobachtungsposition;
c) Markieren eines Punktes auf dem Zielobjekt im ersten Bild und Berechnen eines ersten virtuellen Sichtstrahls von der ersten Beobachtungsposition zu diesem Punkt auf dem Zielobjekt;
d) Markieren desselben Punktes auf dem Zielobjekt im zweiten Bild und Berechnen eines zweiten virtuellen Sichtstrahls von der zweiten Beobachtungsposition zu diesem Punkt auf dem Zielobjekt;
e) Berechnen der dreidimensionalen Koordinate des Punktes auf dem Zielobjekt als dessen Positionsdaten relativ zum dreidimensionalen Referenzmodell als Schnittpunkt des ersten und des zweiten virtuellen Sichtstrahls;
f) Wiederholen der Schritte a) bis e); und
g) Bestimmen der Bewegungsrichtung und/oder der Bewegungsgeschwindigkeit des Zielobjekts.

2. Verfahren nach Anspruch 1,
**dadurch gekennzeichnet,**
**dass** die vorgegebenen Merkmale des merkmalsextrahierten Bildes in den Schritten b2a) und b4a) Linien sind und dass in den Schritten b2b) und b4b) ein dreidimensionales Linienmodell aus dem dreidimensionalen Referenzmodell gebildet wird.

3. Verfahren nach Anspruch 2,
**dadurch gekennzeichnet,**
**dass** die Bestimmung der relativen Positionsdaten und der Lage in den Schritten b2b) und b4b) jeweils in den folgenden Teilschritten erfolgt:
ba) Projizieren des Linienmodells aufgrund einer groben Positions- und Lagehypothese für die Beobachtungsposition in das von einer Bilderfassungseinrichtung aufgenommene Bild der Umgebung des Zielobjekts;
bb) Abgleichen der Linien des dreidimensionalen Linienmodells mit aus dem Bild extrahierten Liniensegmenten; und
bc) Berechnen einer Korrektur der Positions- und Lagehypothese aus dem Abgleich und Bestimmen der Positionsdaten der Beobachtungsposition relativ zum Referenzmodell.

4. Verfahren zur Führung eines Luftfahrzeugs zu einem Zielobjekt und zur Ausrichtung einer Waffe auf das Zielobjekt, wobei zunächst die Positionsdaten des Zielobjekts in einem Referenzsystem als relative Positionsdaten in einem Referenzmodell gemäß einem der vorhergehenden Ansprüche bestimmt werden und wobei dann zur Führung des Luftfahrzeugs folgende Schritte durchgeführt werden:
aa) Erfassen eines Bildes der Umgebung des Zielobjekts mit einer an Bord des Luftfahrzeugs vorgesehenen Bilderfassungseinrichtung;
bb) Abgleichen des in Schritt
aa) gewonnenen Bildes mit dem dreidimensionalen Referenzmodell und daraus Bestimmen der Abbildungsvorschrift zwischen Bild und Referenzmodell, indem
b2a) zur Bildung eines merkmalsextrahierten Bildes vorgegebene Merkmale aus dem in Schritt aa) erfassten ersten Bild extrahiert werden und
b2b) die extrahierten Merkmale des merkmalsextrahierten Bildes mit Merkmalen der gleichen Art aus dem dreidimensionalen Referenzmodell verglichen werden und durch diesen Vergleich ein mit dem in Schritt aa) erfassten Bild maximal übereinstimmendes Referenzbild mit der zugehörigen ersten Referenz-Beobachtungsposition und Lage im dreidimensionalen Referenzmodell ermittelt wird;
cc) Bestimmen der aktuellen Positionsdaten der an Bord des Luftfahrzeugs vorgesehenen Bilderfassungseinrichtung und damit des Luftfahrzeugs relativ zum Referenzmodell aus der Referenz-Beobachtungsposition;
dd) Identifikation des Zielobjekts in dem in Schritt aa) gewonnenen Bild anhand der in Schritt e) ermittelten relativen Positionsdaten des Zielobjekts und
ee) Steuern des Luftfahrzeugs zu dem im Schritt dd) identifizierten Zielobjekt.

5. Verfahren nach Anspruch 4,
**dadurch gekennzeichnet,**
**dass** die Identifikation des Zielobjekts im Schritt dd) unter Berücksichtigung der im Schritt bb) bestimmten Abbildungsvorschrift erfolgt und dass bei der Steuerung des Luftfahrzeugs zum Zielobjekt im Schritt ee) die in Schritt g). bestimmte Bewegungsrichtung und/oder Bewegungsgeschwindigkeit des Zielobjekts berücksichtigt wird beziehungsweise werden.

6. Verfahren nach Anspruch 4 oder 5,
**dadurch gekennzeichnet,**
**dass** das Luftfahrzeug ein unbemannter Flugkörper ist, der mittels des Verfahrens in das Zielobjekt gesteuert wird.

7. Verfahren nach Anspruch 4 oder 5,
**dadurch gekennzeichnet,**
**dass** das Luftfahrzeug mit zumindest einer Waffe versehen ist, die mittels des Verfahrens auf das Zielobjekt ausgerichtet wird.

## Claims

1. Method for determining the position and movement data of a moving target object in a reference system comprising at least two observation positions remote from the target object, with the steps:
a) proving a three-dimensional reference model of the surroundings of the target object, wherein the target object does not form part of the reference model;
b) determining the position data from at least a first and a second observation position, with the steps:
b1) capturing a first image of the target object and of its surroundings from the first observation position;
b2) comparing the first image captured from the first observation position against the three-dimensional reference model, and determining the position data of the first observation position and the location relative to the reference model, wherein
b2a) for forming a first image comprising extracted features, predefined features are extracted from the captured first image,and
b2b) the features extracted from the first image comprising extracted features are compared against features of the same kind from the three-dimensional reference model and by means of this comparison a first reference image with maximum correspondence to the captured first image is determined with the associated first reference observation position and location in the three-dimensional reference model;
b3) capturing a second image of the target object and its surroundings from the second observation position synchronously with the capture of the first image;
b4) comparing the second image captured from the second observation position against the first image or against the three-dimensional reference model, and determination of the position data of the second observation position and of the location relative to the first image or relative to the three-dimensional reference model respectively, wherein
b4a) predefined features are extracted from the captured second image to form a second image comprising extracted features, and
b4b) the extracted features of the second image comprising extracted features are compared against features of the same kind from the three-dimensional reference model, and by means of this comparison a second reference image with maximum correspondence to the captured second image is determined with the associated second reference observation position and location in the three-dimensional reference model, or
b'4) comparing the image captured from the second observation position against the first image captured from the first observation position by comparing the features contained in the images of the surroundings of the target object and determining of the relative location of the second observation position to the first observation position; and
b'5) calculating the second observation position relative to the reference model from the relative location to the first observation position;
c) marking a point on the target object in the first image and calculation of a first virtual sight beam from the first observation position to said point on the target object;
d) marking the same point on the target object in the second image and calculation of a second virtual sight beam from the second observation position to said point on the target object;
e) calculating the three-dimensional coordinates of the point on the target object as its position data relative to the three-dimensional reference model as the point of intersection of the first and second virtual sight beam;
f) repeting steps a) to e); and
g) determining the direction of movement and/or the speed of movement of the target object.

2. Method according to claim 1, **characterised in that** the predefined features of the image comprising extracted features in steps b2a) and b4a) are lines, and in steps b2b) and b4b) a three-dimensional line model is formed from the three-dimensional reference model.

3. Method according to claim 2, **characterised in that** the relative position data and the location in steps b2b) and b4b) are determined in the following sub-steps respectively:
ba) projecting the line model based on an approximate position and location hypothesis for the observation position on to the image of the surroundings of the target object recorded by means of an image capture device;
bb) comparing the lines of the three-dimensional line model against line segments extracted from the image; and
bc) calculating a correction of the position and location hypothesis from the comparison and determination of the position data of the observation position relative to the reference model.

4. Method of guiding an aircraft to a target object and aiming a weapon at the target object, wherein the position data of the target object in a reference system are initially determined as relative position data in a reference model according to any one of the preceding claims and wherein to guide the aircraft the following steps are then performed:
aa) capturing an image of the surroundings of the target object by means of an image capture device provided on board the aircraft;
bb) comparing the image obtained in step aa) against the three-dimensional reference model and based on this a determination of the rule for mapping image to reference model, wherein
b2a) predefined features are extracted from the first image captured in step aa) to form an image comprising extracted features, and
b2b) the extracted features of the image comprising extracted features are compared against features of the same kind from the three-dimensional reference model, and by means of this comparison a reference image with maximum correspondence to the image captured in step aa) is determined with the associated first reference observation position and location in the three-dimensional reference model;
cc) determining the current position data of the image capture device provided on board the aircraft and thus also of the aircraft relative to the reference model from the reference observation position;
dd) identifying the target object in the image obtained in step aa) by means of the relative position data of the target object determined in step e) and
ee) steering the aircraft to the target object identified in step dd).

5. Method according to claim 4, **characterised in that** the identification of the target object in step dd) is performed taking account of the mapping rule determined in step bb) and **in that** in the steering of the aircraft to the target object in step ee) the direction of movement and/or the speed of movement of the target object determined in step g) is/are taken into account.

6. Method according to claim 4 or 5, **characterised in that** the aircraft is an unmanned missile which is steered at the target object by means of the method.

7. Method according to claim 4 or 5, **characterised in that** the aircraft is provided with at least one weapon which is aimed at the target object by means of the method.

## Revendications

1. Procédé de détermination des données de position et de mouvement d'un objet cible mouvant dans un système de référence constitué d'au moins deux positions d'observation éloignées de l'objet cible, comportant les étapes de :
a) fourniture d'un modèle de référence tridimensionnel de l'environnement de l'objet cible, dans lequel l'objet cible ne fait pas partie du modèle de référence ;
b) détermination des données de position d'au moins une première et d'au moins une deuxième position d'observation avec les étapes :
b1) saisie d'une première image de l'objet cible et de l'environnement de celui-ci depuis la première position d'observation ;
b2) comparaison de la première image de l'objet cible saisie depuis la première position d'observation avec le modèle de référence tridimensionnel et détermination des données de position de la première position d'observation et de l'emplacement par rapport au modèle de référence, dans lequel
b2a) afin de former une première image aux caractéristiques extraites, des caractéristiques prédéfinies sont extraites de la première image saisie et
b2b) les caractéristiques extraites de la première image aux caractéristiques extraites sont comparées avec des caractéristiques du même type issues du modèle de référence tridimensionnel et une première image de référence concordant au maximum avec la première image saisie est, par le biais de cette comparaison, déterminée avec la première position d'observation de référence associée et l'emplacement dans le modèle de référence tridimensionnel ;
b3) saisie d'une deuxième image de l'objet cible et de l'environnement de celui-ci depuis la deuxième position d'observation de façon synchrone avec la saisie de la première image ;
b4) comparaison de la deuxième image de l'objet cible saisie depuis la deuxième position d'observation avec la première image ou avec le modèle de référence tridimensionnel et détermination des données de position de la deuxième position d'observation et de l'emplacement par rapport à la première image ou respectivement par rapport au modèle de référence, dans lequel
b4a) afin de former une deuxième image aux caractéristiques extraites, des caractéristiques prédéfinies sont extraites de la deuxième image saisie et
b4b) les caractéristiques extraites de la deuxième image aux caractéristiques extraites sont comparées avec des caractéristiques du même type issues du modèle de référence tridimensionnel et une deuxième image de référence concordant au maximum avec la deuxième image saisie est, par le biais de cette comparaison, déterminée avec la deuxième position d'observation de référence associée et l'emplacement dans le modèle de référence tridimensionnel ou
b'4) comparaison de l'image de l'objet cible saisie depuis la deuxième position d'observation avec la première image de l'objet cible saisie depuis la première position d'observation au moyen d'une comparaison de caractéristiques des caractéristiques de l'environnement de l'objet cible contenues dans les images et détermination de l'emplacement relatif de la deuxième position d'observation par rapport à la première position d'observation ; et
b'5) estimation de la deuxième position d'observation par rapport au modèle de référence à partir de l'emplacement par rapport à la première position d'observation ;
c) marquage d'un point sur l'objet cible dans la première image et calcul d'un premier rayon de visée virtuel depuis la première position d'observation jusqu'à ce point sur l'objet cible ;
d) marquage de ce même point sur l'objet cible dans la deuxième image et calcul d'un deuxième rayon de visée virtuel depuis la deuxième position d'observation jusqu'à ce point sur l'objet cible ;
e) calcul des coordonnées tridimensionnelles du point sur l'objet cible en tant que données de position de celui-ci par rapport au modèle de référence tridimensionnel en tant que point d'intersection du premier et du deuxième rayon de visée ;
f) répétition des étapes a) à e) ; et
g) détermination de la direction de mouvement et/ou de la vitesse de mouvement de l'objet cible.

2. Procédé selon la revendication 1,
**caractérisé en ce que**
les caractéristiques prédéfinies de l'image aux caractéristiques extraites dans les étapes b2a) et b4a) sont des lignes et **en ce que** dans les étapes b2b) et b4b) un modèle à lignes tridimensionnel est formé à partir du modèle de référence tridimensionnel.

3. Procédé selon la revendication 2,
**caractérisé en ce que**
la détermination des données de position relatives et des emplacements dans les étapes b2b) et b4b) s'effectue respectivement dans les étapes partielles suivantes :
ba) projection du modèle de lignes sur la base d'une hypothèse grossière de position et d'emplacement pour la position d'observation dans l'image de l'environnement de l'objet cible prise par un dispositif de capture d'image ;
bb) comparaison des lignes du modèle de lignes tridimensionnel avec des segments de ligne extraits de l'image ; et
bc) calcul d'une correction de l'hypothèse de position et d'emplacement à partir de la comparaison et détermination des données de position de la position d'observation par rapport au modèle de référence.

4. Procédé de guidage d'un aéronef vers un objet cible et d'orientation d'une arme sur l'objet cible, dans lequel les données de position de l'objet cible dans un système de référence sont d'abord déterminées comme données de position relatives dans un modèle de référence selon l'une des revendications précédentes et dans lequel les étapes suivantes sont ensuite mises en œuvre pour le guidage de l'aéronef :
aa) saisie d'une image de l'environnement de l'objet cible avec un dispositif de capture d'image disposé à bord de l'aéronef ;
bb) comparaison de l'image obtenue à l'étape aa) avec le modèle de référence tridimensionnel et détermination à partir de celle-ci de la spécification de représentation entre image et modèle de référence, où
b2a) afin de former une image aux caractéristiques extraites, des caractéristiques prédéfinies sont extraites de la première image saisie à l'étape aa) et
b2b) les caractéristiques extraites de l'image aux caractéristiques extraites sont comparées avec des caractéristiques du même type issues du modèle de référence tridimensionnel et une image de référence concordant au maximum avec l'image saisie à l'étape aa) est, par le biais de cette comparaison, déterminée avec la première position d'observation de référence associée et l'emplacement dans le modèle de référence tridimensionnel ;
cc) détermination des données de position actuelles du dispositif de capture d'image disposé à bord de l'aéronef et ainsi de l'aéronef par rapport au modèle de référence à partir de la position d'observation de référence ;
dd) identification de l'objet cible dans l'image obtenue à l'étape aa) à l'aide des données de position relative de l'objet cible déterminées à l'étape e) et
ee) pilotage de l'aéronef vers l'objet cible identifié à l'étape dd).

5. Procédé selon la revendication 4,
**caractérisé en ce que**
l'identification de l'objet cible à l'étape dd) s'effectue en prenant en compte la spécification de représentation déterminée à l'étape bb) et **en ce que** lors du pilotage de l'aéronef vers l'objet cible à l'étape ee) la direction de mouvement et/ou la vitesse de mouvement de l'objet cible déterminées à l'étape g) sont prises en compte.

6. Procédé selon la revendication 4 ou 5,
**caractérisé en ce que**
l'aéronef est un missile sans équipage, piloté vers l'objet cible au moyen du procédé.

7. Procédé selon la revendication 4 ou 5,
**caractérisé en ce que**
l'aéronef est prévu avec au moins une arme, laquelle est orientée sur l'objet cible au moyen du procédé.
